# FASCICULE DE BREVET EUROPEEN

(11) **EP 3 636 044 B1**
(45) Date de publication et mention de la délivrance du brevet: **22.11.2023**
(21) Numéro de dépôt: 18736988.9
(22) Date de dépôt: 01.06.2018
(51) Int. Cl.: H05B 6/06

(54) **SYSTÈME DE CUISSON**
KOCHSYSTEM
COOKING SYSTEM

(30) Priorité: 08.06.2017 FR 1755144
(43) Date de publication de la demande: 15.04.2020
(73) Titulaire: SEB S.A., 69130 Ecully (FR)
(72) Inventeur: GAILHARD, Thierry, 69970 Chaponnay (FR); CUBIZOLLES, Serge, 38780 Oytier Saint Oblas (FR); GHECHOUA, Karim, 69800 Saint Priest (FR)
(74) Mandataire: SEB Développement
(86) Numéro de dépôt international: PCT/FR2018/051277
(87) Numéro de publication internationale: WO 2018/224758

(56) Documents cités:
- EP-A1- 1 005 822
- FR-A1- 2 766 048
- GB-A- 1 096 659
- US-A1- 2010 000 980

## Description

La présente invention se rapporte au domaine technique général des systèmes de cuisson comprenant un récipient de cuisson et un dispositif pour chauffer le récipient de cuisson contenant des boissons ou des aliments.

Plus particulièrement, la présente invention se rapporte à un système de cuisson comprenant un récipient de cuisson et un dispositif de chauffage dudit récipient de cuisson, ainsi qu'à des procédés d'utilisation d'un tel système de cuisson.

Il est connu du document FR2766048 un système de cuisson comprenant :
- un récipient de cuisson comprenant un insert ferromagnétique à température de Curie déterminée et destiné à être positionné à un emplacement déterminé d'un dispositif de chauffage,
- un dispositif de chauffage pour le récipient de cuisson destiné à être positionné à un emplacement déterminé du dispositif de chauffage dans lequel ledit récipient de cuisson est susceptible d'être positionné pour être chauffé par ledit dispositif de chauffage, ledit dispositif de chauffage comprenant des moyens de chauffage, lesdits moyens de chauffage étant aptes à chauffer le récipient de cuisson et son insert lorsque le récipient de cuisson est positionné à son emplacement déterminé du dispositif de chauffage.

Ainsi, il est connu d'utiliser un générateur à induction pour chauffer un récipient de cuisson utilisant un matériau ferromagnétique à point de Curie déterminé pour réaliser un insert sous forme d'une grille ou d'une plaque située dans le fond amagnétique d'un ustensile de cuisine.

En dessous d'une température inférieure au point de Curie, l'insert est ferromagnétique et donc sensible au champ magnétique créé par le générateur à induction. Dans ces conditions, le récipient de cuisson chauffe.

Au-delà du point de Curie, l'insert devient amagnétique, il n'est plus sensible au champ magnétique du générateur à induction, le récipient de cuisson ne chauffe plus.

Un tel insert est donc un moyen pour protéger le récipient de cuisson contre des surchauffes dues à des utilisations à sec, voire réguler la température du récipient de cuisson.

Néanmoins, cette solution ne fonctionne qu'avec un dispositif de chauffage par induction.

En outre, il est connu du document FR2715245A1, un dispositif limiteur de température destiné à assurer la sécurité d'un système de chauffage quelconque.

Ce dispositif limiteur de température comprend une pastille fixe à température de Curie déterminée disposée à l'extrémité d'un tube et attirant ou non un aimant mobile dans le tube selon que la pastille présente un état ferromagnétique ou amagnétique.

En outre, l'aimant est mécaniquement relié à un doigt rigide pouvant entraîner la torsion d'une lame flexible pour ouvrir ou fermer un contact électrique selon la position de l'aimant.

Cependant, la pastille et l'aimant sont engagés dans le même tube dont l'extrémité est au contact du foyer de cuisson.

Un dispositif analogue est également connu du document GB1096659.

De tels dispositifs limiteurs de température opèrent donc en fonction de la température du foyer de cuisson et non en fonction de la température du récipient de cuisson disposé sur le foyer de cuisson.

Ainsi, ce dispositif réalise une fonction de sécurité limitant la température maximale du foyer de cuisson, et non une fonction de limitation ou de régulation de la température de cuisson des aliments ou de la boisson disposés dans le récipient de cuisson.

Aussi, la présente invention a pour but de résoudre tout ou partie des inconvénients mentionnés ci-dessus, notamment en proposant un dispositif de chauffage proposant une fonction de limitation ou de régulation.

A cet effet, l'invention se rapporte à un système de cuisson comportant :
- un récipient de cuisson comprenant un insert ferromagnétique à température de Curie déterminée et destiné à être positionné à un emplacement déterminé d'un dispositif de chauffage,
- un dispositif de chauffage pour le récipient de cuisson destiné à être positionné à un emplacement déterminé du dispositif de chauffage dans lequel ledit récipient de cuisson est susceptible d'être positionné pour être chauffé par ledit dispositif de chauffage,

ledit dispositif de chauffage comprenant :
   - des moyens de chauffage, lesdits moyens de chauffage étant aptes à chauffer le récipient de cuisson et son insert lorsque le récipient de cuisson est positionné à son emplacement déterminé du dispositif de chauffage,
ledit système de cuisson étant caractérisé en ce que le dispositif de chauffage comprend :
   - un aimant positionné de manière fixe de façon à ce que l'insert du récipient de cuisson soit susceptible de perturber le champ magnétique généré par l'aimant lorsque le récipient de cuisson est positionné à son emplacement déterminé,
   - un capteur magnétique positionné de manière fixe relativement à l'aimant et présentant un premier état de détection dans lequel la valeur d'une grandeur caractéristique du champ magnétique mesurée par le capteur magnétique dépasse une valeur seuil prédéfinie et un deuxième état de détection dans lequel la valeur de la grandeur caractéristique du champ magnétique mesurée par le capteur magnétique ne dépasse pas ladite valeur seuil prédéfinie lorsque le récipient de cuisson est positionné à son emplacement déterminé,
   - une unité de traitement d'un signal délivré par le capteur magnétique,
et en ce que le dispositif de chauffage présente un premier mode de fonctionnement dans lequel le capteur magnétique est dans son premier état de détection et le chauffage du récipient de cuisson par les moyens de chauffage est autorisé, et un deuxième mode de fonctionnement dans lequel le capteur magnétique est dans son deuxième état de détection et le chauffage du récipient de cuisson par les moyens de chauffage est interdit,
le passage du deuxième mode de fonctionnement vers le premier mode de fonctionnement étant réalisé suite à la détection par le capteur magnétique d'un franchissement de la valeur seuil prédéfinie lorsque le récipient de cuisson est positionné à son emplacement déterminé et que l'insert présente une température inférieure à sa température de Curie déterminée, et
   le passage du premier mode de fonctionnement vers le deuxième mode de fonctionnement étant réalisé suite à la détection par le capteur magnétique d'un franchissement de la valeur seuil prédéfinie lorsque le récipient de cuisson est disposé à son emplacement déterminé et que l'insert présente une température supérieure ou égale à sa température de Curie ou bien lorsque le récipient de cuisson est retiré de son emplacement déterminé.

Ainsi, le fonctionnement d'un tel système de cuisson est fonction de la température de l'insert disposé sur le récipient de cuisson, ce qui permet de réaliser une fonction de limitation ou de régulation de la température de cuisson des aliments ou de la boisson disposés dans le récipient de cuisson.

Par ailleurs, un tel système de cuisson selon l'invention est compatible avec tout type de moyens de chauffage.

Selon un aspect de l'invention, la grandeur caractéristique du champ magnétique mesurée par le capteur magnétique comprend l'intensité du champ magnétique, l'orientation du champ magnétique, ou bien le flux magnétique.

Cette disposition permet de sélectionner différents types de capteurs en fonction de la grandeur caractéristique du champ magnétique à mesurer.

Selon un aspect de l'invention, le système comporte un circuit magnétique pour canaliser le flux magnétique de l'aimant, l'insert venant contribuer à fermer ce circuit magnétique lorsque le dispositif de chauffage est dans son premier mode de fonctionnement.

Selon un aspect de l'invention, l'aimant et le capteur magnétique sont montés sur le circuit magnétique.

Selon un aspect de l'invention, l'aimant et le capteur magnétique sont montés en série sur le circuit magnétique, la valeur de la grandeur caractéristique du champ magnétique mesurée par le capteur magnétique dans le premier mode de fonctionnement étant supérieure ou égale à la valeur de la grandeur caractéristique du champ magnétique mesurée par le capteur magnétique dans le deuxième mode de fonctionnement.

Selon un aspect de l'invention, l'aimant et le capteur magnétique sont montés en parallèle sur le circuit magnétique, la valeur de la grandeur caractéristique du champ magnétique mesurée par le capteur magnétique dans le premier mode de fonctionnement étant inférieure ou égale à la valeur de la grandeur caractéristique du champ magnétique mesurée par le capteur magnétique dans le deuxième mode de fonctionnement.

Selon un aspect de l'invention, le capteur magnétique est du type capteur à effet Hall, un capteur de type reed, ou bien une magnétorésistance.

Selon un aspect de l'invention, l'aimant est de type toroïdal dont l'axe est orienté transversalement en direction de l'emplacement déterminé pour le récipient de cuisson, le capteur magnétique étant positionné dans une zone dite de zéro Gauss dans l'axe de l'aimant toroïdal entre l'aimant et l'emplacement déterminé pour le récipient de cuisson.

Selon un aspect de l'invention, le capteur magnétique est de type logique délivrant une information binaire.

Selon un aspect de l'invention, le capteur magnétique est du type rotatif représentatif de l'orientation d'un champ magnétique soit dans un plan 2D, soit dans l'espace 3D, le capteur magnétique étant positionné entre l'aimant et l'emplacement déterminé pour le récipient de cuisson sur la trajectoire des lignes de champ magnétique de l'aimant.

Selon un aspect de l'invention, les moyens de chauffage comprennent un inducteur magnétique, un foyer radiant, ou un foyer halogène, un foyer par conduction thermique, et/ou un foyer par convection thermique.

Selon un aspect de l'invention, le dispositif comprend une pluralité de capteurs magnétiques, chacun du premier état de détection et du deuxième état de détection d'un capteur magnétique étant associé respectivement au premier mode de fonctionnement et au deuxième mode de fonctionnement du dispositif de chauffage.

Selon un aspect de l'invention, l'unité de traitement du signal délivré par le capteur magnétique est agencée pour réaliser au moins une des actions suivantes :
- couper l'alimentation des moyens de chauffage, ou
- réguler la puissance des moyens de chauffage, et/ou
- déclencher une alerte à destination d'un utilisateur

Selon un aspect de l'invention, l'insert est positionné dans le fond du récipient de cuisson.

Selon un aspect de l'invention, le fond comprend une pluralité d'inserts présentant chacun des températures de Curie déterminées différentes.

Selon un aspect de l'invention, les inserts sont répartis le long de tout ou partie de la circonférence d'un même cercle.

Selon un aspect de l'invention, le récipient de cuisson est un ustensile de cuisine ou une cuve amovible d'un appareil électrique.

Selon un aspect de l'invention, le système de cuisson comprend un kit de récipients de cuisson comprenant une pluralité de récipients de cuisson de même type tels que décrits précédemment, comprenant chacun un fond dans lequel est/sont disposé(s) un ou plusieurs inserts à température de Curie déterminée, ladite ou lesdites température(s) de Curie déterminée(s) étant différente(s) d'un récipient de cuisson à un autre.

Selon un aspect de l'invention, le système comprend un kit d'inserts amovibles pour un récipient de cuisson ou un kit de récipients de cuisson tels que décrits précédemment, dans lequel les inserts comprennent des moyens de fixation complémentaires de moyens de fixation disposés sur le ou les récipients de cuisson, par exemple du type quart de tour, à baïonnette, ou du type filetage hélicoïdal, chaque insert du kit présentant une température de Curie déterminée différente d'un insert à l'autre.

La présente invention se rapporte également à un procédé d'utilisation d'un système de cuisson tel que décrit précédemment comprenant un dispositif de chauffage et un récipient de cuisson tels que décrits précédemment, comprenant une étape consistant à déplacer en rotation le récipient de cuisson dans son emplacement déterminé du dispositif de chauffage de manière à amener un insert déterminé parmi la pluralité d'inserts selon une positon prédéterminée relativement à l'aimant fixe.

La présente invention se rapporte également à un procédé d'utilisation d'un système de cuisson tel que décrit précédemment comprenant un dispositif de chauffage et un récipient de cuisson tels que décrits précédemment de manière à ce que chaque insert parmi la pluralité d'inserts occupe une position prédéterminée relativement à un capteur magnétique déterminé parmi la pluralité de capteurs magnétiques, comprenant une étape consistant à sélectionner un couple capteur magnétique-insert pour définir le premier mode de fonctionnement et le deuxième mode de fonctionnement du dispositif de chauffage.

D'autres avantages et caractéristiques de l'invention ressortiront mieux à la lecture de la description détaillée de l'invention faite à titre illustratif et non limitatif en référence aux figures qui illustrent tout ou partie d'un dispositif de chauffage selon l'invention.
La figure 1 illustre un premier mode de réalisation d'un dispositif de chauffage d'un système de cuisson selon l'invention.
La figure 2 illustre un deuxième mode de réalisation d'un dispositif de chauffage d'un système de cuisson selon l'invention.
La figure 3 illustre un premier mode de fonctionnement d'un troisième mode de réalisation d'un dispositif de chauffage d'un système de cuisson selon l'invention.
La figure 4 illustre un deuxième mode de fonctionnement du troisième mode de réalisation d'un dispositif de chauffage d'un système de cuisson selon l'invention.
La figure 5 illustre un premier mode de fonctionnement d'un quatrième mode de réalisation d'un système de cuisson d'un dispositif de chauffage selon l'invention.
La figure 6 illustre un deuxième mode de fonctionnement du quatrième mode de réalisation d'un dispositif de chauffage d'un système de cuisson selon l'invention.
La figure 7 illustre un premier mode de fonctionnement d'une variante du quatrième mode de réalisation d'un dispositif de chauffage d'un système de cuisson selon l'invention.
La figure 8 illustre un deuxième mode de fonctionnement de la variante du quatrième mode de réalisation d'un dispositif de chauffage d'un système de cuisson selon l'invention.
La figure 9 illustre une variante d'un récipient de cuisson selon l'invention.
La figure 10 illustre un kit de récipients de cuisson selon l'invention.
La figure 11 illustre un kit d'inserts selon l'invention.

Seuls les éléments nécessaires à la compréhension de l'invention ont été représentés. Pour faciliter la lecture des dessins, les mêmes éléments portent les mêmes références d'une figure à l'autre.

Un système 300 de cuisson selon l'invention comprend un récipient de cuisson 10 et un dispositif de chauffage 1.

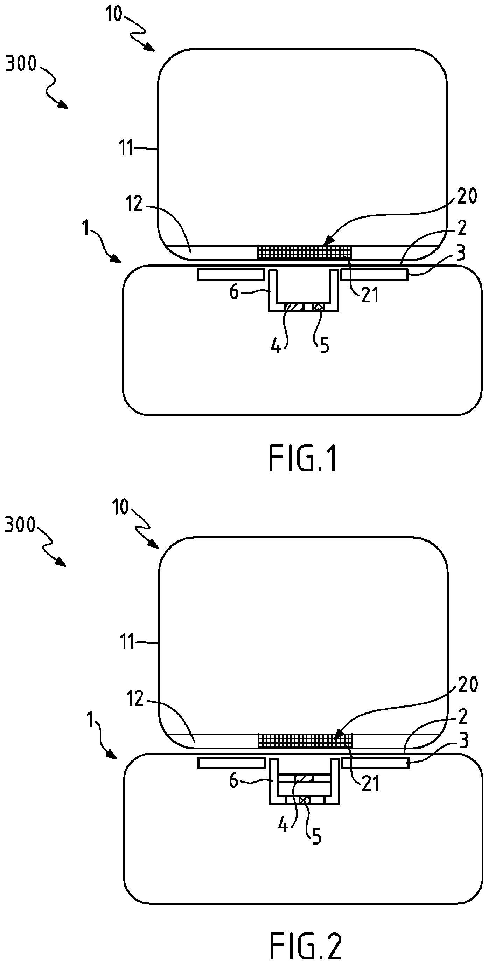

Comme illustré aux figures 1 et 2, le dispositif de chauffage 1 comprend un emplacement 2 déterminé dans lequel un récipient de cuisson 10 est susceptible d'être positionné pour être chauffé par ledit dispositif de chauffage 1.

Un tel emplacement 2 déterminé comprend par exemple un foyer de cuisson dans le cas d'une plaque de cuisson ou bien le fond du logement pour une cuve amovible dans le cas d'un appareil électrique de cuisson.

Le récipient de cuisson 10 comprend quant à lui un corps 11 comportant un fond 12.

Le corps 11 peut être réalisé aussi bien en matériau amagnétique qu'en matériau ferromagnétique.

Dans l'exemple présenté, le récipient de cuisson 10 comprend un insert 20 ferromagnétique présentant une température de Curie TC déterminée.

Cet insert 20 présente la forme d'un disque et est positionné dans le fond 12 du récipient de cuisson 10.

De manière avantageuse, l'insert 20 présente une surface plane 21 disposée en regard de l'emplacement 2 déterminé du dispositif de chauffage 1 lorsque le récipient de cuisson 10 est positionné sur son emplacement 2 déterminé.

En outre, le dispositif de chauffage 1 comprend des moyens de chauffage 3 aptes à chauffer le récipient de cuisson 10 et son insert 20 lorsque le récipient de cuisson 10 est positionné à son emplacement 2 déterminé du dispositif de chauffage 1.

Ces moyens de chauffage 3 comprennent par exemple un inducteur magnétique, un foyer radiant, un foyer halogène, un foyer par conduction thermique, et/ou un foyer par convection thermique, pouvant fonctionner à l'électricité ou au gaz selon le cas.

En outre, le dispositif de chauffage 1 comprend un aimant 4 positionné de manière fixe de façon à ce que l'insert 20 du récipient de cuisson 10 soit susceptible de perturber le champ magnétique généré par l'aimant 4 lorsque le récipient de cuisson 10 est positionné à son emplacement 2 déterminé et que la température T de l'insert 20 est inférieure à sa température de Curie TC.

Le dispositif de chauffage 1 comprend également un capteur magnétique 5.

Ce capteur magnétique 5 est positionné de manière fixe relativement à l'aimant 4 et présente un premier état de détection E1 dans lequel la valeur V1 d'une grandeur caractéristique du champ magnétique mesurée par le capteur magnétique 5 dépasse une valeur seuil VS prédéfinie et un deuxième état de détection E2 dans lequel la valeur V2 de la grandeur caractéristique du champ magnétique mesurée par le capteur magnétique 5 ne dépasse pas la valeur seuil VS prédéfinie lorsque le récipient de cuisson 10 est positionné à son emplacement 2 déterminé.

La grandeur caractéristique du champ magnétique mesurée par le capteur magnétique 5 comprend l'intensité du champ magnétique, l'orientation du champ magnétique, ou bien le flux magnétique.

Pour rappel, le flux magnétique ou flux d'induction magnétique, est une grandeur physique mesurable caractérisant l'intensité et la répartition spatiale du champ magnétique.

Ce capteur magnétique 5 peut être du type capteur à effet Hall, un capteur de type reed, ou bien une magnétorésistance.

Enfin, le dispositif de chauffage 1 comprend une unité de traitement (non illustrée) du signal délivré par le capteur magnétique 5.

Cette unité de traitement comprend par exemple un microcontrôleur.

Cette unité de traitement du signal délivré par le capteur magnétique 5 est agencée pour réaliser au moins une des actions suivantes :
- couper l'alimentation des moyens de chauffage 3 afin de réaliser automatiquement une fonction de limitation, ou
- réguler la puissance des moyens de chauffage 3 afin de réaliser automatiquement une fonction de régulation.

La fonction de limitation peut par exemple être réalisée en coupant les moyens de chauffage 3 soit en interrompant définitivement une alimentation électrique grâce à un interrupteur soit en coupant une alimentation au gaz grâce à une électrovanne.

La fonction de régulation peut par exemple être réalisée en coupant momentanément une alimentation électrique des moyens de chauffage 3 jusqu'à ce que le capteur magnétique 5 revienne dans son premier état de détection E1.

En plus de ces fonctions, l'unité de traitement peut également allumer ou éteindre un voyant en vue de signaler ou d'alerter l'utilisateur sur le mode de fonctionnement dans lequel se trouve le dispositif de chauffage 1.

Ainsi, en fonction de l'état de détection E1, E2 du capteur magnétique 5, l'unité de traitement sera en mesure de faire fonctionner le dispositif de chauffage 1 selon plusieurs modes de fonctionnement.

C'est ainsi que le dispositif de chauffage 1 présente un premier mode de fonctionnement F1 dans lequel le capteur magnétique 5 est dans son premier état de détection E1 et le chauffage du récipient de cuisson 10 par les moyens de chauffage 3 est autorisé, et un deuxième mode de fonctionnement F2 dans lequel le capteur magnétique 5 est dans son deuxième état de détection E2 et le chauffage du récipient de cuisson 10 par les moyens de chauffage 3 est interdit.

Le passage du deuxième mode de fonctionnement F2 vers le premier mode de fonctionnement F1 est réalisé suite à la détection par le capteur magnétique 5 d'un franchissement de la valeur seuil VS prédéfinie lorsque le récipient de cuisson 10 est positionné à son emplacement 2 déterminé et que l'insert 20 présente une température T inférieure à sa température de Curie TC déterminée.

A l'inverse, le passage du premier mode de fonctionnement F1 vers le deuxième mode de fonctionnement F2 est quant à lui réalisé suite à la détection par le capteur magnétique 5 d'un franchissement de la valeur seuil VS prédéfinie lorsque le récipient de cuisson 10 est disposé à son emplacement 2 déterminé et que l'insert 20 présente une température T supérieure ou égale à sa température de Curie TC déterminée ou bien lorsque le récipient de cuisson 10 est retiré de son emplacement 2 déterminé.

Dans les deux modes de réalisations présentés respectivement aux figures 1 et 2, le dispositif de chauffage 1 comporte un circuit magnétique 6 pour canaliser le flux magnétique de l'aimant 4, l'insert 20 venant contribuer à fermer ce circuit magnétique 6 lorsque le dispositif de chauffage 1 est dans son premier mode de fonctionnement F1.

La grandeur caractéristique du champ magnétique mesurée par le capteur magnétique 5 peut par exemple être le flux magnétique.

Ce circuit magnétique 6 peut par exemple être réalisé avec un empilement de lamelles de fer.

Dans ces deux modes de réalisation, l'aimant 4 et le capteur magnétique 5 sont tous deux montés sur le circuit magnétique 6.

Dans le premier mode de réalisation illustré à la figure 1, l'aimant 4 et le capteur magnétique 5 sont tous deux disposés en série dans le circuit magnétique 6.

Ainsi, lorsque le récipient de cuisson 10 est positionné sur l'emplacement 2 déterminé du dispositif de chauffage 1 et que le dispositif de chauffage 1 se trouve dans son premier mode de fonctionnement F1 alors le circuit magnétique 6 et l'insert 20 forment une boucle comprenant l'aimant 4 et le capteur magnétique 5.

Dans cette boucle circule la majorité du flux magnétique.

Dans ces conditions, la valeur V1 du flux magnétique mesurée par le capteur magnétique 5 est supérieur à la valeur seuil VS prédéfinie de flux magnétique.

A contrario, lorsque la température T de l'insert 20 est supérieure ou égale à sa température de Curie TC déterminée alors le dispositif de chauffage 1 bascule vers son deuxième mode de fonctionnement F2 et la circulation du flux magnétique dans l'insert 20 est interrompue, le dispositif de chauffage 1 bascule dans son deuxième mode de fonctionnement et la valeur V2 du flux magnétique mesurée par le capteur magnétique 5 est inférieure ou égale à la valeur seuil VS prédéfinie de flux magnétique.

Dans le deuxième mode de réalisation illustré à la figure 2, l'aimant 4 et le capteur magnétique 5 sont tous deux disposés en parallèle dans une première boucle du circuit magnétique 6.

De plus, lorsque le récipient de cuisson 10 est positionné sur l'emplacement 2 déterminé du dispositif de chauffage 1 et que le dispositif de chauffage 1 se trouve dans son premier mode de fonctionnement F1 alors le circuit magnétique 6 et l'insert 20 forment une deuxième boucle pour la circulation du flux magnétique.

L'aimant 4 est disposé dans une branche du circuit magnétique 6 commune à la première boucle et à la deuxième boucle.

Ainsi, lorsque le récipient de cuisson 10 est positionné sur l'emplacement 2 déterminé du dispositif de chauffage 1 et que le dispositif de chauffage 1 se trouve dans son premier mode de fonctionnement F1 alors la majorité du flux magnétique circule dans la deuxième boucle.

Dans ces conditions, la valeur V1 du flux magnétique mesurée par le capteur magnétique 5 est inférieure à la valeur seuil VS prédéfinie de flux magnétique.

A contrario, lorsque la température T de l'insert 20 est supérieure ou égale à sa température de Curie TC déterminée alors le dispositif de chauffage 1 bascule vers son deuxième mode de fonctionnement F2 et la circulation du flux magnétique dans l'insert 20 est interrompue, le dispositif de chauffage 1 bascule dans son deuxième mode de fonctionnement et la valeur V2 du flux magnétique mesurée par le capteur magnétique 5 est supérieure ou égale à la valeur seuil VS prédéfinie de flux magnétique.

Dans un troisième mode de réalisation d'un dispositif de chauffage 1 selon l'invention, l'aimant 4 présente une forme toroïdale dont l'axe est orienté transversalement en direction de l'emplacement 2 du récipient de cuisson 10.

L'aimant 4 est également positionné de manière centrée par rapport à l'emplacement 2 déterminé.

Dans ce mode de réalisation, aucun circuit magnétique n'est utilisé.

Le capteur magnétique 5 est quant à lui positionné dans une zone dite de zéro Gauss dans l'axe de l'aimant 4 toroïdal entre l'aimant 4 et l'emplacement 2 déterminé.

Cette zone de zéro Gauss correspond à une zone dans laquelle le flux magnétique de l'aimant 4 est nul lorsque le champ magnétique de l'aimant 4 ne subit aucune perturbation extérieure.

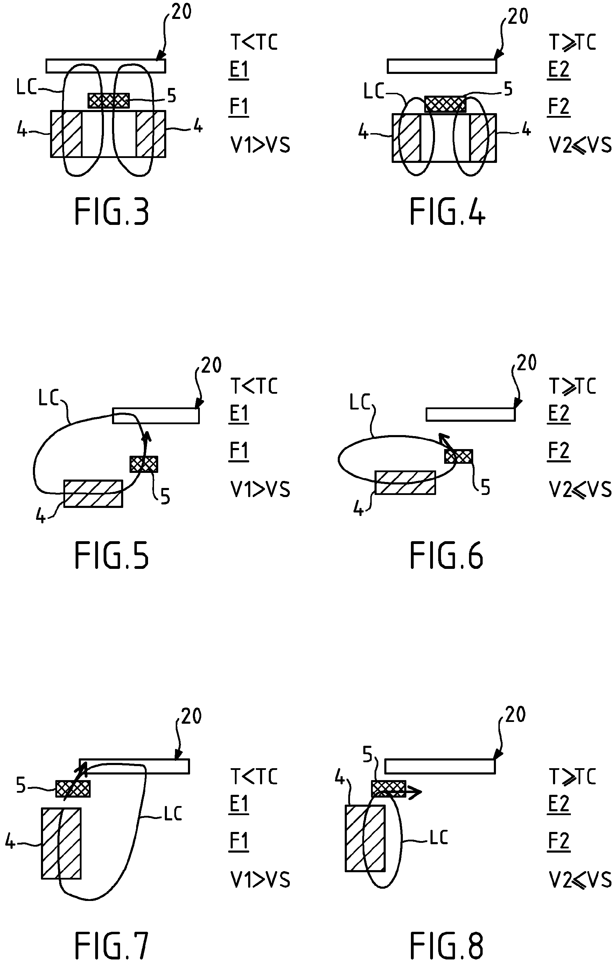

Comme illustré à la figure 3, lorsque le dispositif de chauffage 1 est dans son premier mode de fonctionnement F1, alors l'insert 20 perturbe l'orientation des lignes de champ magnétique LC de l'aimant 4.

Cette perturbation conduit le flux magnétique à traverser l'insert 20 avant de se reboucler sur lui-même au niveau de l'aimant 4.

Dans ces conditions, le capteur magnétique 5 mesure une première valeur V1 de flux magnétique supérieure à la valeur seuil VS prédéfinie de flux magnétique.

Comme illustré à la figure 4, à contrario lorsque le dispositif de chauffage 1 est dans son deuxième mode de fonctionnement F2, alors l'insert 20 ne perturbe plus l'orientation des lignes de champ magnétique LC de l'aimant 4.

Dans ces conditions, le capteur magnétique 5 qui se trouve situé dans une zone de zéro Gauss détecte une deuxième valeur V2 de flux magnétique inférieure à la valeur seuil VS prédéfinie de flux magnétique.

En outre, cette deuxième valeur V2 de flux magnétique est ici nulle.

Ainsi, le capteur magnétique 5 peut ici être de type logique délivrant une information binaire.

Bien entendu, un positionnement différent du capteur magnétique 5 peut être envisagé pourvu que l'on arrive à détecter une variation suffisante de la valeur du flux magnétique entre le premier état de détection E1 et le deuxième état de détection E2 du capteur magnétique 5.

Dans un quatrième mode de réalisation illustré aux figures 5 et 6, et dans une variante de ce quatrième mode de réalisation illustrée aux figures 7 et 8, l'aimant 4 et le capteur magnétique 5 sont positionnés de manière excentrée l'un par rapport à l'autre mais également de manière excentrée par rapport à l'emplacement 2 déterminé et donc à l'insert 20 lorsque le récipient de cuisson 10 est disposé sur l'emplacement 2 déterminé.

Ici encore, aucun circuit magnétique n'est utilisé.

Dans ce quatrième mode de réalisation illustré aux figures 5 et 6, l'aimant 4 s'étend selon un axe principal sensiblement parallèle à la surface plane 21 de l'insert 20 lorsque le récipient de cuisson 10 est positionné sur son emplacement 2 déterminé tandis que dans la variante de ce quatrième mode de réalisation illustrée aux figures 7 et 8, l'aimant 4 s'étend selon un axe principal sensiblement transversal à la surface plane 21 de l'insert 20 lorsque le récipient de cuisson 10 est positionné sur son emplacement 2 déterminé.

Le capteur magnétique 5 est disposé entre l'aimant 4 et l'emplacement 2 déterminé sur la trajectoire des lignes de champ magnétique LC de l'aimant 4.

Ce capteur magnétique 5 est du type rotatif représentatif de l'orientation du champ magnétique qui peut être mesurée soit dans un plan 2D, soit dans l'espace 3D.

Ainsi, lorsque le dispositif de chauffage 1 est dans son premier mode de fonctionnement F1, alors l'insert 20 perturbe l'orientation des lignes de champ magnétique LC de l'aimant 4.

Cette perturbation conduit le flux magnétique à traverser le capteur magnétique 5 selon une première orientation puis l'insert 20 avant de se reboucler sur lui-même au niveau de l'aimant 4.

Dans ces conditions, comme illustré aux figures 5 et 7, le capteur magnétique 5 mesure une première valeur V1 caractéristique de l'orientation du champ magnétique, cette valeur étant supérieure à la valeur seuil VS prédéfinie pour l'orientation du champ magnétique.

Comme illustré aux figures 6 et 8, à contrario lorsque le dispositif de chauffage 1 est dans son deuxième mode de fonctionnement F2, alors l'insert 20 ne perturbe plus l'orientation des lignes de champ magnétique LC de l'aimant 4.

Dans ces conditions, le capteur magnétique 5 mesure une deuxième valeur V2 caractéristique de l'orientation du champ magnétique, cette valeur étant inférieure ou égale à la valeur seuil VS prédéfinie pour l'orientation du champ magnétique.

Le même raisonnement peut être appliqué à la variante de ce quatrième mode de réalisation illustré aux figures 7 et 8.

Dans une variante de réalisation d'un récipient de cuisson 10 selon l'invention, le récipient de cuisson 10 comprend une pluralité d'inserts 20a, 20b, 20c présentant chacun des températures de Curie TC déterminées différentes.

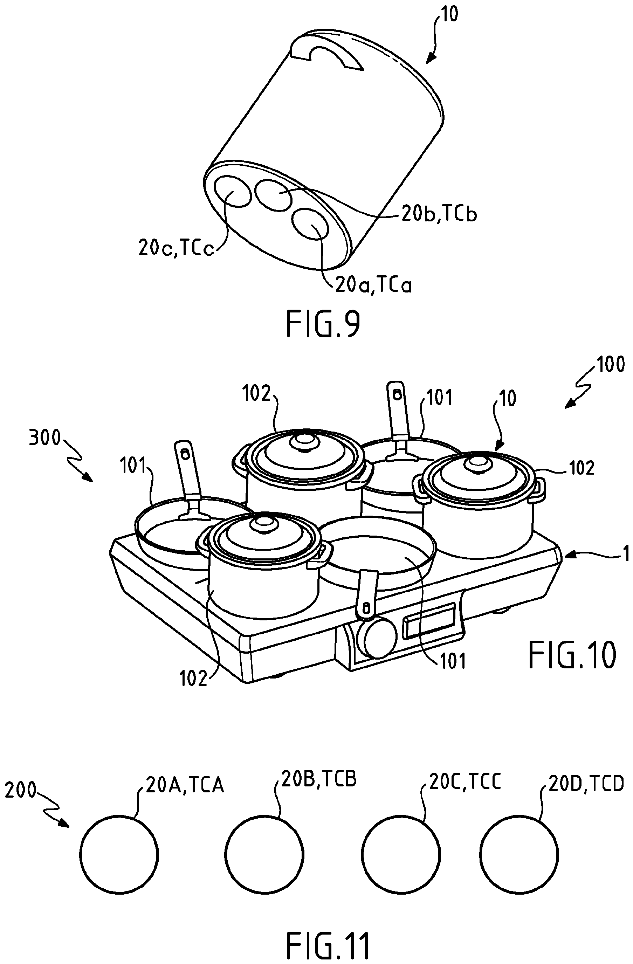

Comme illustré à la figure 9, ces inserts 20a, 20b, 20c sont répartis sur le fond 12 du récipient de cuisson 10 le long de tout ou partie de la circonférence d'un même cercle.

Par exemple, l'insert 20a présente une première température de Curie TCa, l'insert 20b présente une deuxième température de Curie TCb et l'insert 20c présente une troisième température de Curie TCc, les températures de Curie TCa, TCb et TCc étant toutes différentes.

Ainsi, au cours d'une étape d'un procédé d'utilisation d'un système 300 de cuisson comprenant un tel récipient de cuisson 10 et un tel dispositif de chauffage 1, l'utilisateur peut choisir la température de limitation ou de régulation qui lui convient parmi ces trois températures de Curie TCa, TCb et TCc en déplaçant en rotation le récipient de cuisson 10 dans son emplacement 2 déterminé du dispositif de chauffage 1 de manière à amener un insert 20a, 20b, 20c déterminé parmi la pluralité d'inserts 20a, 20b, 20c selon une position prédéterminée relativement à l'aimant 4 fixe.

Afin d'aider l'utilisateur à positionner correctement le récipient de cuisson 10 sur son emplacement 2 déterminé de manière à faire coïncider un insert particulier 20a, 20b ou 20c avec l'aimant 4 du dispositif de chauffage 1, le dispositif de chauffage 1 et le récipient de cuisson 10 comprennent des moyens d'indexation (non illustrés) pour indiquer une position relative du récipient de cuisson 10 par rapport au dispositif de chauffage 1.

De manière analogue, selon une variante le dispositif de chauffage 1 peut comprendre une pluralité d'aimants 4 et de capteurs magnétiques 5, chaque état de détection E1, E2 de chaque capteur magnétique 5 étant associé respectivement au premier mode de fonctionnement F1 et au deuxième mode de fonctionnement F2 du dispositif de chauffage 1.

Chacun des modes de fonctionnement F1, F2 peut ainsi être associé à une commande particulière, par exemple un réglage particulier de la puissance de chauffage des moyens de chauffage 3.

Il est également possible d'envisager qu'un tel dispositif de chauffage 1 avec une pluralité d'aimants 4 et de capteurs magnétiques 5 puisse fonctionner avec un récipient de cuisson 10 présentant une pluralité d'inserts 20a, 20b, 20c de manière à ce que chaque insert 20 parmi la pluralité d'inserts 20a, 20b, 20c soit susceptible de perturber le champ magnétique généré par l'aimant 4 qui lui est associé parmi la pluralité d'aimants 4.

Au cours d'une étape d'un procédé d'utilisation d'un système 300 de cuisson comprenant un tel récipient de cuisson 10 et un tel dispositif de chauffage 1, l'utilisateur par le biais d'une interface utilisateur (non illustrée) sélectionne alors un couple capteur magnétique-insert pour définir le premier mode de fonctionnement F1 et le deuxième mode de fonctionnement F2 du dispositif de chauffage 1.

Cette sélection correspond en réalité à la sélection de la température de Curie TC déterminée de l'insert 20 du couple capteur magnétique-insert à partir de laquelle le changement de mode de fonctionnement est réalisé.

Comme illustré à la figure 10, il est également possible de prévoir un kit 100 de récipients de cuisson 10 comprenant des récipients de cuisson 10 de même type dans lequel est/sont disposé(s) un ou plusieurs inserts 20 à température de Curie TC déterminée, ladite ou au moins une desdites température(s) de Curie TC déterminée(s) étant différente(s) d'un récipient de cuisson de même type à un autre.

On entend par « même type » de récipients de cuisson 10, des récipients de cuisson 10 ayant des formes et des dimensions sensiblement semblables.

Ainsi, sur la figure 10 est illustré un premier kit de poêles 101 et un deuxième kit de casseroles 102.

Toutes les poêles du premier kit 101 présentent au moins un insert 20 à température de Curie TC déterminée différente de celle d'une autre poêle du premier kit de poêles 101.

De même, toutes les casseroles du deuxième kit 102 présentent au moins un insert 20 à température de Curie TC déterminée différente de celle d'une autre casserole du deuxième kit de casseroles 102.

Bien entendu, des récipients de cuisson 10 de types différents pourraient également se présenter sous forme de kit 100 avec au moins un insert 20 à température de Curie TC déterminée différente de celle d'un autre récipient de cuisson 10 du kit 100 de récipients de cuisson 10 sans pour autant sortir du cadre de l'invention.

Afin de pouvoir facilement distinguer les différents récipients de cuisson 10 d'un même kit 100, chaque récipient de cuisson 10 peut présenter un signe distinctif particulier, par exemple une couleur.

D'autre part, afin de réduire l'encombrement d'un tel kit 100 de récipients de cuisson 10, il est également concevable de prévoir un kit d'inserts 200 amovibles pour un récipient de cuisson 10 seul ou bien pour un ou plusieurs récipients de cuisson 10 d'un kit 100 de récipients de cuisson 10 dans lequel les inserts 20 du kit d'inserts 200 comprennent des moyens de fixation complémentaires disposés sur le ou les récipients de cuisson 10.

Ces moyens de fixation complémentaires (non illustrés) comprennent par exemple des moyens de fixation du type quart de tour, à baïonnette, ou du type filetage hélicoïdal, chaque insert 20 du kit d'inserts 200 présentant une température de Curie TC déterminée différente d'un insert à l'autre.

Ainsi, la figure 11 montre un kit d'inserts 200 comprenant quatre inserts 20A, 20B, 20C et 20D présentant chacun des températures de Curie TCA, TCB, TCC et TCD différentes.

Tout comme pour les ustensiles du kit 100 de récipients de cuisson 10, ces inserts 20A, 20B, 20C et 20D du kit d'inserts 200 peuvent chacun présenter un signe distinctif particulier, par exemple une couleur.

La présente invention se rapporte également à un système 300 de cuisson comportant une combinaison parmi le dispositif de chauffage 1 décrit précédemment et un récipient de cuisson 10 ou un kit 100 de récipients de cuisson ou bien une combinaison parmi le dispositif de chauffage 1 décrit précédemment et un récipient de cuisson 10 et un kit d'inserts 200 ou un kit 100 de récipients de cuisson 10 et un kit d'inserts 200 tels que décrits précédemment.

Bien que l'invention ait été décrite en liaison avec des exemples particuliers de réalisation, il est bien évident qu'elle n'y est nullement limitée.

Des modifications restent possibles, notamment du point de vue de l'agencement et de la constitution des différents éléments ou par substitution d'équivalents techniques, sans sortir pour autant du domaine de protection de l'invention.

## Revendications

1. Système (300) de cuisson comportant :
- un récipient de cuisson (10) comprenant un insert (20) ferromagnétique à température de Curie (TC) déterminée et destiné à être positionné à un emplacement (2) déterminé d'un dispositif de chauffage (1),
- un dispositif de chauffage (1) pour le récipient de cuisson (10) destiné à être positionné à un emplacement (2) déterminé du dispositif de chauffage (1) dans lequel ledit récipient de cuisson (10) est susceptible d'être positionné pour être chauffé par ledit dispositif de chauffage (1),
ledit dispositif de chauffage (1) comprenant :
- des moyens de chauffage (3), lesdits moyens de chauffage (3) étant aptes à chauffer le récipient de cuisson (10) et son insert (20) lorsque le récipient de cuisson (10) est positionné à son emplacement (2) déterminé du dispositif de chauffage (1),
ledit système de cuisson étant **caractérisé en ce que** le dispositif de chauffage (1) comprend :
- un aimant (4) positionné de manière fixe de façon à ce que l'insert (20) du récipient de cuisson (10) soit susceptible de perturber le champ magnétique généré par l'aimant (4) lorsque le récipient de cuisson (10) est positionné à son emplacement (2) déterminé,
- un capteur magnétique (5) positionné de manière fixe relativement à l'aimant (4) et présentant un premier état de détection (E1) dans lequel la valeur (V1) d'une grandeur caractéristique du champ magnétique mesurée par le capteur magnétique (5) dépasse une valeur seuil (VS) prédéfinie et un deuxième état de détection (E2) dans lequel la valeur (V2) de la grandeur caractéristique du champ magnétique mesurée par le capteur magnétique (5) ne dépasse pas ladite valeur seuil (VS) prédéfinie lorsque le récipient de cuisson (10) est positionné à son emplacement (2) déterminé,
- une unité de traitement d'un signal délivré par le capteur magnétique (5),
et **en ce que** le dispositif de chauffage (1) présente un premier mode de fonctionnement (F1) dans lequel le capteur magnétique (5) est dans son premier état de détection (E1) et le chauffage du récipient de cuisson (10) par les moyens de chauffage (3) est autorisé, et un deuxième mode de fonctionnement (F2) dans lequel le capteur magnétique (5) est dans son deuxième état de détection (E2) et le chauffage du récipient de cuisson (10) par les moyens de chauffage (3) est interdit,
le passage du deuxième mode de fonctionnement (F2) vers le premier mode de fonctionnement (F1) étant réalisé suite à la détection par le capteur magnétique (5) d'un franchissement de la valeur seuil (VS) prédéfinie lorsque le récipient de cuisson (10) est positionné à son emplacement (2) déterminé et que l'insert (20) présente une température (T) inférieure à sa température de Curie (TC) déterminée, et
le passage du premier mode de fonctionnement (F1) vers le deuxième mode de fonctionnement (F2) étant réalisé suite à la détection par le capteur magnétique (5) d'un franchissement de la valeur seuil (VS) prédéfinie lorsque le récipient de cuisson (10) est disposé à son emplacement (2) déterminé et que l'insert (20) présente une température (T) supérieure ou égale à sa température de Curie (TC) ou bien lorsque le récipient de cuisson (10) est retiré de son emplacement (2) déterminé.

2. Système (300) de cuisson selon la revendication 1, dans lequel la grandeur caractéristique du champ magnétique mesurée par le capteur magnétique (5) comprend l'intensité du champ magnétique, l'orientation du champ magnétique, ou bien le flux magnétique.

3. Système (300) de cuisson selon l'une des revendications 1 ou 2, le dispositif de chauffage (1) comporte un circuit magnétique (6) pour canaliser le flux magnétique de l'aimant (4), l'insert (20) venant contribuer à fermer ce circuit magnétique (6) lorsque le dispositif de chauffage (1) est dans son premier mode de fonctionnement (F1).

4. Système (300) de cuisson selon la revendication 3, dans lequel l'aimant (4) et le capteur magnétique (5) sont montés sur le circuit magnétique (6).

5. Système (300) de cuisson selon la revendication 4, dans lequel l'aimant (4) et le capteur magnétique (5) sont montés en série sur le circuit magnétique (6), la valeur (V1) de la grandeur caractéristique du champ magnétique mesurée par le capteur magnétique (5) dans le premier mode de fonctionnement (F1) étant supérieure ou égale à la valeur (V2) de la grandeur caractéristique du champ magnétique mesurée par le capteur magnétique (5) dans le deuxième mode de fonctionnement (F2).

6. Système (300) de cuisson selon la revendication 4, dans lequel l'aimant (4) et le capteur magnétique (5) sont montés en parallèle sur le circuit magnétique (6), la valeur (V1) de la grandeur caractéristique du champ magnétique mesurée par le capteur magnétique (5) dans le premier mode de fonctionnement (F1) étant inférieure ou égale à la valeur (V2) de la grandeur caractéristique du champ magnétique mesurée par le capteur magnétique (5) dans le deuxième mode de fonctionnement (F2).

7. Système (300) de cuisson selon l'une des revendications 2 à 6, dans lequel le capteur magnétique (5) est du type capteur à effet Hall, un capteur de type reed, ou bien une magnétorésistance.

8. Système (300) de cuisson selon l'une des revendications 1 ou 2, dans lequel l'aimant (4) est de type toroïdal dont l'axe est orienté transversalement en direction de l'emplacement (2) déterminé pour le récipient de cuisson (10), le capteur magnétique (5) étant positionné dans une zone dite de zéro Gauss dans l'axe de l'aimant (4) toroïdal entre l'aimant (4) et l'emplacement (2) déterminé pour le récipient de cuisson (10).

9. Système (300) de cuisson selon la revendication 8, dans lequel le capteur magnétique (5) est de type logique délivrant une information binaire.

10. Système (300) de cuisson selon l'une des revendications 1 ou 2, dans lequel le capteur magnétique (5) est du type rotatif représentatif de l'orientation d'un champ magnétique soit dans un plan 2D, soit dans l'espace 3D, le capteur magnétique (5) étant positionné entre l'aimant (4) et l'emplacement (2) déterminé pour le récipient de cuisson (10) sur la trajectoire des lignes de champ magnétique (LC) de l'aimant (4).

11. Système (300) de cuisson selon l'une des revendications 1 à 10, dans lequel les moyens de chauffage (3) comprennent un inducteur magnétique, un foyer radiant, ou un foyer halogène, un foyer par conduction thermique, et/ou un foyer par convection thermique.

12. Système (300) de cuisson selon l'une des revendications 1 à 11, comprenant une pluralité de capteurs magnétiques (5), chacun du premier état de détection (E1) et du deuxième état de détection (E2) d'un capteur magnétique (5) étant associé respectivement au premier mode de fonctionnement (F1) et au deuxième mode de fonctionnement (F2) du dispositif de chauffage (1).

13. Système (300) de cuisson selon l'une des revendications 1 à 12, dans lequel l'unité de traitement du signal délivré par le capteur magnétique (5) est agencée pour réaliser au moins une des actions suivantes :
- couper l'alimentation des moyens de chauffage (3), ou
- réguler la puissance des moyens de chauffage (3), et/ou
- déclencher une alerte à destination d'un utilisateur.

14. Système (300) de cuisson selon l'une des revendications 1 à 13, dans lequel l'insert (20) est positionné dans le fond (12) du récipient de cuisson (10).

15. Système (300) de cuisson selon la revendication 14, dans lequel le fond (12) comprend une pluralité d'inserts (20a, 20b, 20c) présentant chacun des températures de Curie (Ta, Tb, Tc) déterminées différentes.

16. Système (300) de cuisson selon la revendication 15, dans lequel les inserts (20a, 20b, 20c) sont répartis le long de tout ou partie de la circonférence d'un même cercle.

17. Système (300) de cuisson selon l'une des revendications 1 à 16, dans lequel le récipient de cuisson (10) est un ustensile de cuisine ou une cuve amovible d'un appareil électrique.

18. Système (300) de cuisson selon l'une des revendications 14 à 16 comprenant un kit (100) de récipient de cuisson (10) comprenant une pluralité de récipients de cuisson (10) de même type, comprenant chacun un fond (12) dans lequel est/sont disposé(s) un ou plusieurs inserts (20) à température de Curie (TC) déterminée, ladite ou lesdites température(s) de Curie (TC) déterminée(s) étant différente(s) d'un récipient de cuisson (10) à un autre.

19. Système (300) de cuisson selon l'une des revendications 14 à 16 ou 18 comprenant un kit d'inserts (200) amovibles pour un récipient de cuisson (10) ou le cas échéant un kit (100) de récipients de cuisson (10), dans lequel les inserts (20) comprennent des moyens de fixation complémentaires de moyens de fixation disposés sur le ou les récipients de cuisson (10), par exemple du type quart de tour, à baïonnette, ou du type filetage hélicoïdal, chaque insert du kit (200) présentant une température de Curie (TC) déterminée différente d'un insert (20) à l'autre.

20. Procédé d'utilisation d'un système (300) de cuisson selon la revendication 16, et comprenant une étape consistant à déplacer en rotation le récipient de cuisson (10) dans son emplacement (2) déterminé du dispositif de chauffage (1) de manière à amener un insert (20) déterminé parmi la pluralité d'inserts (20) selon une position prédéterminée relativement à l'aimant (4) fixe.

21. Procédé d'utilisation selon la revendication 20 d'un système (300) de cuisson selon la revendication 12 et selon l'une des revendications 15 ou 16 de manière à ce que chaque insert (20) parmi la pluralité d'inserts (20) occupe une position prédéterminée relativement à un capteur magnétique (5) déterminé parmi la pluralité de capteurs magnétiques (5), comprenant une étape consistant à sélectionner un couple capteur magnétique-insert pour définir le premier mode de fonctionnement (F1) et le deuxième mode de fonctionnement (F2) du dispositif de chauffage (1).

## Patentansprüche

1. Kochsystem (300), umfassend:
- einen Kochbehälter (10), umfassend einen ferromagnetischen Einsatz (20) mit vorbestimmter Curie-Temperatur (TC), der dazu vorgesehen ist, an einer bestimmten Stelle (2) einer Heizvorrichtung (1) positioniert zu werden,
- eine Heizvorrichtung (1) für den Kochbehälter (10), der dazu vorgesehen ist, an einer bestimmten Stelle (2) der Heizvorrichtung (1) positioniert zu werden, wobei der Kochbehälter (10) angepasst ist, positioniert zu werden, um von der Heizvorrichtung (1) erhitzt zu werden,
wobei die Heizvorrichtung (1) umfasst:
- Heizmittel (3), wobei die Heizmittel (3) geeignet sind, den Kochbehälter (10) und seinen Einsatz (20) zu erhitzen, wenn der Kochbehälter (10) an seiner bestimmten Stelle (2) der Heizvorrichtung (1) positioniert ist,
wobei das Kochsystem **dadurch gekennzeichnet ist, dass** die Heizvorrichtung (1) Folgendes umfasst:
- einen Magnet (4), der auf feste Weise positioniert ist, so dass der Einsatz (20) des Kochbehälters (10) angepasst ist, das von dem Magnet (4) erzeugte Magnetfeld zu stören, wenn der Kochbehälter (10) an seiner bestimmten Stelle (2) positioniert ist,
- einen Magnetsensor (5), der relativ zum Magnet (4) auf feste Weise positioniert ist und einen ersten Erfassungszustand (E1) aufweist, bei dem der Wert (V1) einer charakteristischen Größe des Magnetfelds, der von dem Magnetsensor (5) gemessen wird, einen vordefinierten Schwellenwert (VS) überschreitet, und einen zweiten Erfassungszustand, (E2), bei dem der Wert (V2) der charakteristischen Größe des Magnetfelds, der von dem Magnetsensor (5) gemessen wird, den vordefinierten Schwellenwert (VS) nicht überschreitet, wenn der Kochbehälter (10) an seiner bestimmten Stelle (2) positioniert ist,
- eine Behandlungseinheit eines von dem Magnetsensor (5) gelieferten Signals,
und dadurch, dass die Heizvorrichtung (1) einen ersten Betriebsmodus (F1) aufweist, in dem der Magnetsensor (5) sich in seinem ersten Erfassungszustand (E1) befindet und das Erhitzen des Kochbehälters (10) durch die Heizmittel (3) erlaubt ist, und einen zweiten Betriebsmodus (F2), in dem der Magnetsensor (5) sich in seiner zweiten Erfassungszustand (E2) befindet und das Erhitzen des Kochbehälters (10) durch die Heizmittel (3) verboten ist,
wobei der Übergang vom zweiten Betriebsmodus (F2) in den ersten Betriebsmodus (F1) im Anschluss an die Erfassung einer Überschreitung des vorab definierten Schwellenwerts (VS) durch den Magnetsensor (5) durchgeführt wird, wenn der Kochbehälter (10) an seiner bestimmten Stelle (2) positioniert ist und der Einsatz (20) eine niedrigere Temperatur (T) als seine bestimmte Curie-Temperatur (TC) aufweist, und
wobei der Übergang vom ersten Betriebsmodus (F1) in den zweiten Betriebsmodus (F2) im Anschluss an die Erfassung einer Überschreitung des vorab definierten Schwellenwerts (VS) durch den Magnetsensor (5) durchgeführt wird, wenn der Kochbehälter (10) an seiner bestimmten Stelle (2) positioniert ist und der Einsatz (20) eine höhere oder gleich hohe Temperatur (T) wie seine Curie-Temperatur (TC) aufweist oder wenn der Kochbehälter (10) von seiner bestimmten Stelle (2) entnommen ist.

2. Kochsystem (300) nach Anspruch 1, wobei die von dem Magnetsensor (5) gemessene charakteristische Größe des Magnetfeldes die Stärke des Magnetfeldes, die Ausrichtung des Magnetfelds oder den Magnetfluss umfasst.

3. Kochsystem (300) nach einem der Ansprüche 1 oder 2, wobei die Heizvorrichtung (1) einem Magnetkreis (6) umfasst, um den Magnetfluss des Magnets (4) zu kanalisieren, wobei der Einsatz (20) dazu beiträgt, diesen Magnetkreis (6) zu schließen, wenn der Kochbehälter (1) in seinem ersten Betriebsmodus (F1) ist.

4. Kochsystem (300) nach Anspruch 3, wobei der Magnet (4) und der Magnetsensor (5) im Magnetkreis (6) angebracht sind.

5. Kochsystem (300) nach Anspruch 4, wobei der Magnet (4) und der Magnetsensor (5) in Reihe im Magnetkreis (6) angebracht sind, wobei der Wert (V1) der charakteristischen Größe des Magnetfelds, der von dem Magnetsensor (5) im ersten Betriebsmodus (F1) gemessen wird, gleich oder größer als der Wert (V2) der charakteristischen Größe des Magnetfelds ist, der von dem Magnetsensor (5) im zweiten Betriebsmodus (F2) gemessen wird.

6. Kochsystem (300) nach Anspruch 4, wobei der Magnet (4) und der Magnetsensor (5) parallel im Magnetkreis (6) angebracht sind, wobei der Wert (V1) der charakteristischen Größe des Magnetfelds, der von dem Magnetsensor (5) im ersten Betriebsmodus (F1) gemessen wird, kleiner oder gleich dem Wert (V2) der charakteristischen Größe des Magnetfelds ist, der von dem Magnetsensor (5) im zweiten Betriebsmodus (F2) gemessen wird.

7. Kochsystem (300) nach einem der Ansprüche 2 bis 6, wobei der Magnetsensor (5) vom Typ Hall-Sensor, vom Typ Reed-Sensor oder ein Magnetwiderstand ist.

8. Kochsystem (300) nach einem der Ansprüche 1 oder 2, wobei der Magnet (4) vom Toroid-Typ ist, dessen Achse in Richtung der bestimmten Stelle (2) für den Kochbehälter (10) querverlaufend ausgerichtet ist, wobei der Magnetsensor (5) in einer als Null-Gauß-Zone bezeichneten Zone in der Achse des toroiden Magnets (4) zwischen dem Magnet (4) und der bestimmten Stelle (2) für den Kochbehälter (10) positioniert ist.

9. Kochsystem (300) nach Anspruch 8, wobei der Magnetsensor (5) vom Logiktyp ist, der eine binäre Information bereitstellt.

10. Kochsystem (300) nach einem der Ansprüche 1 oder 2, wobei der Magnetsensor (5) vom drehenden Typ ist, der für die Ausrichtung eines Magnetfelds entweder in einer 2D-Ebene oder im 3D-Raum repräsentativ ist, wobei der Magnetsensor (5) zwischen dem Magnet (4) und der bestimmten Stelle (2) für den Kochbehälter (10) auf dem Weg der Linien des Magnetfelds (LC) des Magnets (4) positioniert ist.

11. Kochsystem (300) nach einem der Ansprüche 1 bis 10, wobei die Heizmittel (3) einen magnetischen Induktor, eine Strahlungsfeuerstelle oder eine Halogenfeuerstelle, eine Feuerstelle durch thermische Konduktion und/oder eine Feuerstelle durch thermische Konvektion umfassen.

12. Kochsystem (300) nach einem der Ansprüche 1 bis 11, umfassend eine Vielzahl von Magnetsensoren (5), wobei jeder des ersten Erfassungszustands (E1) und des zweiten Erfassungszustands (E2) eines Magnetsensors (5) dem ersten Betriebsmodus (F1) bzw. dem zweiten Betriebsmodus (F2) der Heizvorrichtung (1) zugeordnet ist.

13. Kochsystem (300) nach einem der Ansprüche 1 bis 12, wobei die Behandlungseinheit des vom Magnetsensor (5) gelieferten Signals eingerichtet ist, um mindestens eine der folgenden Aktionen durchzuführen:
- Unterbrechen der Stromversorgung der Heizmittel (3), oder
- Regulieren der Leistung der Heizmittel (3), und/oder
- Auslösen einer an einen Benutzer gerichteten Warnmeldung.

14. Kochsystem (300) nach einem der Ansprüche 1 bis 13, wobei der Einsatz (20) am Boden (12) des Kochbehälters (10) positioniert ist.

15. Kochsystem (300) nach Anspruch 14, wobei der Boden (12) eine Vielzahl von Einsätzen (20a, 20b, 20c) umfasst, die jeweils unterschiedliche bestimmte Curie-Temperaturen (Ta, Tb, Tc) aufweisen.

16. Kochsystem (300) nach Anspruch 15, wobei die Einsätze (20a, 20b, 20c) entlang des gesamten oder eines Teils des Umfangs eines selben Kreises verteilt sind.

17. Kochsystem (300) nach einem der Ansprüche 1 bis 16, wobei der Kochbehälter (10) ein Küchengerät oder ein abnehmbarer Innenbehälter einer elektrischen Einrichtung ist.

18. Kochsystem (300) nach eine der Ansprüche 14 bis 16, umfassend einen Satz (100) Kochbehältern (10), umfassend eine Vielzahl von Kochbehältern (10) vom gleichen Typ, die jeweils einen Boden (12) umfassen, in dem ein oder mehrere Einsätze (20) mit bestimmter Curie-Temperatur (TC) angeordnet ist/sind, wobei die bestimmte(n) Curie-Temperatur(en) (TC) sich von einem Kochbehälter (10) zu einem anderen unterscheidet (unterscheiden).

19. Kochsystem (300) nach einem der Ansprüche 14 bis 16 oder 18, umfassend einen Satz von abnehmbaren Einsätzen (200) für einen Kochbehälter (10) oder gegebenenfalls einen Satz (100) von Kochbehältern (10) wobei die Einsätze (20) Befestigungsmittel umfassen, die komplementär sind zu Befestigungsmitteln, die auf dem oder den Kochbehältern (10) angeordnet sind, beispielsweise vom Typ Vierteldrehung, Bajonett oder spiralförmiges Gewinde, wobei jeder Einsatz des Satzes (200) eine bestimmte Curie-Temperatur (TC) aufweist, die sich von einem Einsatz (20) zum anderen unterscheidet.

20. Verfahren zur Verwendung eines Kochsystems (300) nach Anspruch 16 und umfassend einen Schritt, bestehend aus einer Drehbewegung des Kochbehälters (10) in seiner bestimmten Stelle (2) der Kochvorrichtung (1) derart, dass ein bestimmter Einsatz (20) aus der Vielzahl von Einsätzen (20) relativ zum festen Magnet (4) gemäß einer vorbestimmten Position geführt wird.

21. Verwendungsverfahren nach Anspruch 20 eines Kochsystems (300) nach Anspruch 12 und nach einem der Ansprüche 15 oder 16 derart, dass jeder Einsatz (20) aus der Vielzahl von Einsätzen (20) eine relativ zu einem bestimmten Magnetsensor (5) aus der Vielzahl von Magnetsensoren (5) vorbestimmte Position einnimmt, umfassend einen Schritt, der aus Auswählen eines Magnetsensor-Einsatz-Paars besteht, um den ersten Betriebsmodus (F1) und den zweiten Betriebsmodus (F2) der Heizvorrichtung (1) zu definieren.

## Claims

1. Cooking system (300) comprising:
- a cooking vessel (10) comprising a ferromagnetic insert having a determined Curie temperature (TC) and intended to be positioned at a determined location (2) of the heating device (1),
- a heating device (1) for the cooking vessel (10) to be positioned at a determined location (2) of the heating device (1) wherein said cooking vessel (10) is capable of being positioned to be heated by said heating device (1),
said heating device (1) comprising:
- heating means (3), said heating means (3) being able to heat the cooking vessel (10) and its insert (20) when the cooking vessel (10) is positioned at its determined location (2) of the heating device (1),
said cooking system being **characterised in that** the heating device (1) comprises:
- a magnet (4) fixedly positioned such that the insert (20) of the cooking vessel (10) is able to disturb the magnetic field generated by the magnet (4) when the cooking vessel (10) is positioned at its determined location (2),
- a magnetic sensor (5) fixedly positioned relative to the magnet (4) and having a first detection state (E1) wherein the value (V1) of a magnitude characteristic of the magnetic field measured by the magnetic sensor (5) exceeds a predefined threshold value (VS) and a second detection state (E2) wherein the value (V2) of the magnitude characteristic of the magnetic field measured by the magnetic sensor (5) does not exceed said predefined threshold value (VS) when the cooking vessel (10) is positioned at its determined location (2),
- a unit for processing a signal delivered by the magnetic sensor (5),
and **in that** the heating device (1) has a first operating mode (F1) wherein the magnetic sensor (5) is in its first detection state (E1) and the heating of the cooking vessel (10) by the heating means (3) is allowed, and a second operating mode (F2) wherein the magnetic sensor (5) is in its second detection state (E2) and the heating of the cooking vessel (10) by the heating means (3) is prohibited,
the passage from the second operating mode (F2) to the first operating mode (F1) being done following the detection by the magnetic sensor (5) of a crossing of the predefined threshold value (VS) when the cooking vessel (10) is positioned at its determined location (2) and that the insert (20) has a temperature (T) less than its determined Curie temperature (TC), and
the passage from the first operating mode (F1) to the second operating mode (F2) being done following the detection by the magnetic sensor (5) of a crossing of the predefined threshold value (VS) when the cooking vessel (10) is disposed at its determined location (2) and that the insert (20) has a temperature (T) greater than or equal to its Curie temperature (TC), or when the cooking vessel (10) is removed from its determined location (2).

2. Cooking system (300) according to claim 1, wherein the magnitude characteristic of the magnetic field measured by the magnetic sensor (5) comprises the intensity of the magnetic field, the orientation of the magnetic field, or the magnetic flow.

3. Cooking system (300) according to one of claims 1 or 2, the heating device (1) comprises a magnetic circuit (6) to channel the magnetic flow of the magnet (4), the insert (20) contributing to closing this magnetic circuit (6) when the heating device (1) is in its first operating mode (F1).

4. Cooking system (300) according to claim 3, wherein the magnet (4) and the magnetic sensor (5) are mounted on the magnetic circuit (6).

5. Cooking system (300) according to claim 4, wherein the magnet (4) and the magnetic sensor (5) are mounted in series on the magnetic circuit (6), the value (V1) of the magnitude characteristic of the magnetic field measured by the magnetic sensor (5) in the first operating mode (F1) being greater than or equal to the value (V2) of the magnitude characteristic of the magnetic field measured by the magnetic sensor (5) in the second operating mode (F2).

6. Cooking system (300) according to claim 4, wherein the magnet (4) and the magnetic sensor (5) are mounted in parallel on the magnetic circuit (6), the value (V1) of the magnitude characteristic of the magnetic field measured by the magnetic sensor (5) in the first operating mode (F1) being less than or equal to the value (V2) of the magnitude characteristic of the magnetic field measured by the magnetic sensor (5) in the second operating mode (F2).

7. Cooking system (300) according to one of claims 2 to 6, wherein the magnetic sensor (5) is of the Hall effect sensor, a reed type sensor, or a magnetoresistance.

8. Cooking system (300) according to one of claims 1 or 2, wherein the magnet (4) is of the toroidal type, the axis of which is oriented transversally in the direction of the determined location (2) for the cooking vessel (10), the magnetic sensor (5) being positioned in a so-called zero Gauss zone in the axis of the toroidal magnet (4) between the magnet (4) and the determined location (2) for the cooking vessel (10).

9. Cooking system (300) according to claim 8, wherein the magnetic sensor (5) is of the logic type delivering binary information.

10. Cooking system (300) according to one of claims 1 or 2, wherein the magnetic sensor (5) is of the rotary type representative of the orientation of a magnetic field is in a 2D plane, or in the 3D space, the magnetic sensor (5) being positioned between the magnet (4) and the determined location (2) for the cooking vessel (10) over the trajectory of the magnetic field lines (LC) of the magnet (4).

11. Cooking system (300)according to one of claims 1 to 10, wherein the heating means (3) comprise a magnetic inducer, a radiant element, or a halogen element, a thermal conduction element, and/or a thermal convection element.

12. Cooking system (300) according to one of claims 1 to 11, comprising a plurality of magnetic sensors (5), each of the first detection state (E1) and of the second detection state (E2) of a magnetic sensor (5) being associated respectively to the first operating mode (F1) and to the second operating mode (F2) of the heating device (1).

13. Cooking system (300) according to one of claims 1 to 12, wherein the unit for processing the signal delivered by the magnetic sensor (5) is arranged to carry out at least one of the following actions:
- cut off the supply of the heating means (3), or
- adjust the power of the heating means (3) and/or
- trigger an alert intended for a user.

14. Cooking system (300) according to one of claims 1 to 13, wherein the insert (20) is positioned in the bottom (12) of the cooking vessel (10).

15. Cooking system (300) according to claim 14, wherein the bottom (12) comprises a plurality of inserts (20a, 20b, 20c) each having different determined Curie temperatures (Ta, Tb, Tc).

16. Cooking system (300) according to claim 15, wherein the inserts (20a, 20b, 20c) are distributed along all or some of the circumference of one same circle.

17. Cooking system (300) according to one of claims 1 to 16, wherein the cooking vessel (10) is a kitchen utensil or a removable container of an electrical appliance.

18. Cooking system (300) according to one of claims 14 to 16 comprising a cooking vessel (10) kit (100) comprising a plurality of cooking vessels (10) of the same type, each comprising a bottom (12), wherein one or more inserts (20) is/are disposed having a determined Curie temperature (TC), said or said determined Curie temperature(s) (TC) being different from one cooking vessel (10) to another.

19. Cooking system (300) according to one of claims 14 to 16 or 18 comprising a kit of removable inserts (200) for a cooking vessel (10) of, if necessary, a kit (100) of cooking vessels (10), wherein the inserts (20) comprise complementary fixing means of fixing means disposed on the cooking vessel(s) (10), for example of the quarter-turn type, bayonet type, or of the helical thread type, each insert of the kit (200) having a different determined Curie temperature (TC) from one insert (20) to the other.

20. Method for using a cooking system (300) according to claim 16, and comprising a step consisting of rotatably moving the cooking vessel (10) in its determined location (2) of the heating device (1) so as to bring a determined insert (20) from among the plurality of inserts (20) according to a predetermined position relative to the fixed magnet (4).

21. Use method according to claim 20 of a cooking system (300) according to claim 12 and according to one of claims 15 or 16, such that each insert (20) from among the plurality of inserts (20) occupies a predetermined position relative to a determined magnetic sensor (5) from among the plurality of magnetic sensors (5), comprising a step consisting of selecting a magnetic-insert sensor pair to define the first operating mode (F1) and the second operating mode (F2) of the heating device (1).
